# EUROPEAN PATENT APPLICATION

(11) **EP 4 769 755 A1**
(43) Date of publication of application: **01.07.2026**
(21) Application number: 25867243.5
(22) Date of filing: 21.08.2025
(51) Int. Cl.: H01M 50/342, H01M 50/178, H01M 50/197, H01M 50/193

(54) **ELECTRODE LEAD ASSEMBLY AND SECONDARY BATTERY**

(30) Priority: 08.10.2024 KR 20240136981; 12.08.2025 KR 20250111356
(71) Applicant: LG Energy Solution, Ltd., Seoul 07335 (KR)
(72) Inventor: LEE, Yu Jin, Daejeon 34122 (KR); KIM, Mi Na, Daejeon 34122 (KR); PARK, Eun Suk, Daejeon 34122 (KR); JU, Hye Yeong, Daejeon 34122 (KR); YU, Hyung Kyun, Daejeon 34122 (KR)
(74) Representative: Goddar, Heinz J.
(86) International application number: PCT/KR2025/012724
(87) International publication number: WO 2026/079652

(57) **Abstract**

The present disclosure relates to an electrode lead assembly and a secondary battery, and more specifically, to an electrode lead assembly provided to be connected to an electrode assembly and a secondary battery that includes such an electrode lead assembly and can be repeatedly charged and discharged. An electrode lead assembly according to an embodiment of the present disclosure may include an electrode lead provided to be connected to an electrode assembly; a lead film covering at least a portion of the electrode lead; and a flow path forming portion disposed between the electrode lead and the lead film and forming a flow path through which fluid flows, wherein the lead film may include a first portion; and a second portion thicker than the first portion, and the first portion may be provided on one side of the flow path forming portion.

## Description

### TECHNICAL FIELD

### CROSS-REFERENCE TO RELATED APPLICATIONS

The present application is based on and claims priority from Korean Patent Application No. 10-2024-0136981, filed on October 8, 2024 and Korean Patent Application No. 10-2025-0111356, filed on August 12, 2025, with the Korean Intellectual Property Office, the disclosure of which is incorporated herein in its entirety by reference.

### TECHNICAL FIELD

The present disclosure relates to an electrode lead assembly and a secondary battery, and more specifically, to an electrode lead assembly provided to be connected to an electrode assembly and a secondary battery that includes such an electrode lead assembly and can be repeatedly charged and discharged.

### BACKGROUND ART

A secondary battery that can be repeatedly charged and discharged may be classified into a cylindrical, prismatic, and pouch-type battery depending on the shape thereof. Among them, the pouch-type secondary battery uses a sheet-shaped exterior material formed of a multilayer film including a metal layer (foil) and a resin layer coated on both surfaces of the metal layer, which may significantly reduce battery weight compared to a cylindrical or prismatic battery using a metal can.

An electrolyte may be accommodated together with an electrode assembly inside the exterior material of such a pouch-type secondary battery. At this time, residual moisture of the electrolyte or moisture infiltrated from the outside may react with the lithium salt inside the exterior material of the pouch-type secondary battery to generate hydrogen fluoride (HF), and gases such as carbon dioxide, carbon monoxide, ethylene, and methane may be generated due to decomposition of the electrolyte.

Additionally, depending on the material of the positive electrode included in the electrode assembly of the pouch-type secondary battery, hydrogen and HF may be further generated, which may cause overheating due to overcharge and internal short circuit during the process of charging and discharging the secondary battery. Accordingly, a large amount of gas may be generated inside the exterior material.

The internal pressure of the exterior material may increase due to such gas, and the increased internal pressure may cause a swelling phenomenon in which the exterior material swells or a venting phenomenon in which a portion of the exterior material bursts. Therefore, the pouch-type secondary battery requires a structure capable of efficiently emitting gas inside the exterior material to prevent the swelling or venting phenomenon of the exterior material.

### DISCLOSURE

### TECHNICAL PROBLEM

The present disclosure is designed to solve the problems of the related art, and therefore the present disclosure is directed to providing an electrode lead assembly having a structure capable of efficiently emitting internal gas of an exterior material and a secondary battery including such an electrode assembly.

### TECHNICAL SOLUTION

An electrode lead assembly according to the present disclosure may include an electrode lead provided to be connected to an electrode assembly; a lead film covering at least a portion of the electrode lead; and a flow path forming portion disposed between the electrode lead and the lead film and forming a flow path through which fluid flows, wherein the lead film may include a first portion; and a second portion thicker than the first portion, and the first portion may be provided on one side of the flow path forming portion.

One surface of the flow path forming portion may be attached to the electrode lead, and the other surface of the flow path forming portion may not be attached to the lead film.

The flow path may be formed between the other surface of the flow path forming portion and the lead film.

The shape of the flow path may correspond to the shape of the flow path forming portion.

The flow path forming portion may include a first member extending along the width direction of the electrode lead; and a second member connected to the first member and extending along the length direction of the electrode lead.

The width of the first member may be greater than the width of the second member.

The plurality of second members may be connected to the first member.

The first portion may cover the second member, and the second portion may cover at least a portion of the first member.

The first portion may be composed of a single-layer film made of a resin material, and the second portion may have a multilayer structure in which films made of a resin material are laminated in three layers.

The first portion may have a multilayer structure in which films made of a resin material are laminated in two layers, and the second portion may have a multilayer structure in which films made of a resin material are laminated in three layers.

The second portion may be formed to be 1.5 to 3 times thicker than the first portion.

The thickness of the first portion may be 60 µm to 75 µm, and the thickness of the second portion may be 200 µm.

The thickness of the first portion may be 125 µm to 135 µm, and the thickness of the second portion may be 200 µm.

A secondary battery according to the present disclosure may include an electrode assembly including an electrode and a separator; an exterior material accommodating the electrode assembly; an electrode lead connected to the electrode assembly and protruding to the outside of the exterior material; a lead film covering at least a portion of the electrode lead to insulate the electrode lead from the exterior material; and a flow path forming portion provided between the electrode lead and the lead film and forming a gas emission flow path through which internal gas of the exterior material is emitted to the outside when internal pressure of the exterior material increases, wherein the lead film may include a first portion; and a second portion thicker than the first portion, and the first portion may be provided on one side of the flow path forming portion.

The flow path forming portion may include a first member extending along the width direction of the electrode lead; and a second member extending from the first member toward the internal space of the exterior material.

The width of the first member may be greater than the width of the second member.

The plurality of second members may be connected to the first member.

### ADVANTAGEOUS EFFECTS

The electrode lead assembly according to an embodiment of the present disclosure may include an electrode lead provided to be connected to an electrode assembly; a lead film covering at least a portion of the electrode lead; and a flow path forming portion disposed between the electrode lead and the lead film and forming a flow path through which fluid flows. At this time, the lead film may include a first portion; and a second portion thicker than the first portion, and the first portion may be provided on one side of the flow path forming portion. In this case, the first portion has a relatively thin thickness, and thus the operating pressure at which the first portion is opened to open the flow path may be low. Therefore, when the electrode lead assembly is connected to the electrode assembly of the secondary battery and coupled to the exterior material, the internal gas of the exterior material of the secondary battery may be effectively emitted through the flow path.

### DESCRIPTION OF DRAWINGS

FIG. 1 is a perspective view illustrating a secondary battery provided with an electrode lead assembly according to the present disclosure.
FIG. 2 is a cross-sectional view illustrating a portion of a cross-section taken along line A-A' of FIG. 1.
FIG. 3 is a view showing in detail an adhesive structure in which an electrode lead, a flow path forming portion, and a lead film are bonded in the electrode lead assembly according to the present disclosure.
FIGS. 4 and 5 are views for describing that the first portion of the lead film has a thinner thickness than the second portion.
FIG. 6 is a view for describing an example in which the first portion of the lead film is formed in a single-layer structure.
FIGS. 7 and 8 are views for describing an example in which the first portion of the lead film is formed in a multilayer structure.
FIG. 9 is a perspective view illustrating a secondary battery according to the present disclosure.
FIG. 10 is a cross-sectional view illustrating a portion of a cross-section taken along line A-A' of FIG. 9.
FIG. 11 is a view showing in detail an adhesive structure in which an electrode lead, a flow path forming portion, a lead film, and an exterior material are bonded in the secondary battery according to the present disclosure.

### BEST MODE

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, an electrode lead assembly and a secondary battery according to the present disclosure will be described with reference to the drawings.

### Electrode lead assembly

### First embodiment

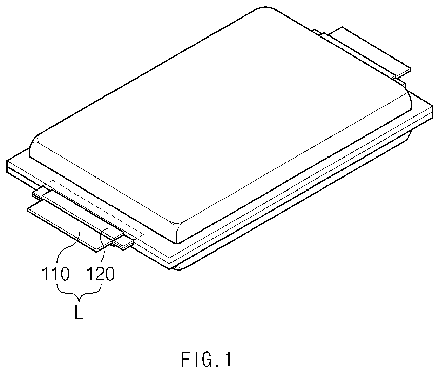

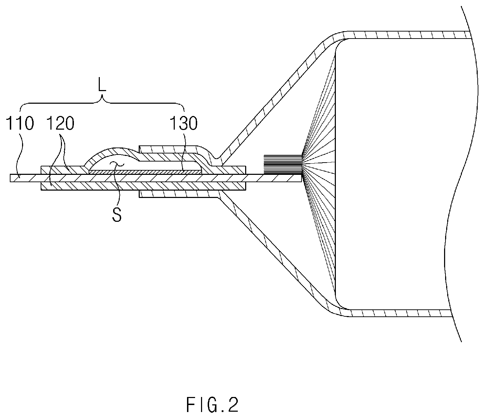

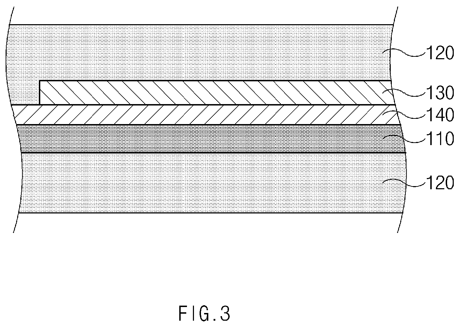

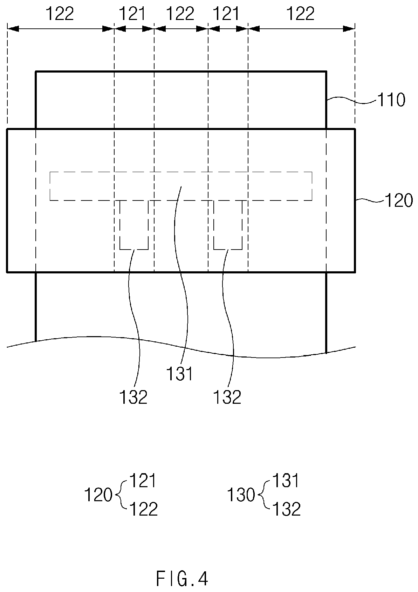

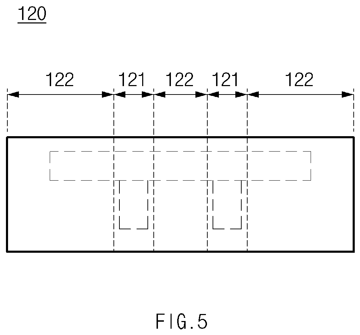

FIG. 1 is a perspective view illustrating a secondary battery provided with an electrode lead assembly according to the present disclosure. FIG. 2 is a cross-sectional view illustrating a portion of a cross-section taken along line A-A' of FIG. 1. FIG. 3 is a view showing in detail an adhesive structure in which an electrode lead, a flow path forming portion, and a lead film are bonded in the electrode lead assembly according to the present disclosure. FIGS. 4 and 5 are views for describing that the first portion of the lead film has a thinner thickness than the second portion.

Referring to FIGS. 1 to 5, an electrode lead assembly L according to the first embodiment of the present disclosure may include an electrode lead 110 provided to be connected to an electrode assembly; a lead film 120 covering at least a portion of the electrode lead 110; and a flow path forming portion 130 disposed between the electrode lead 110 and the lead film 120 and forming a flow path S through which fluid flows. At this time, the lead film 120 may include a first portion 121; and a second portion 122 thicker than the first portion 121, and the first portion 121 may be provided on one side of the flow path forming portion 130.

In this case, the first portion 121 has a relatively thin thickness, and thus the operating pressure at which the first portion 121 is opened to open the flow path S may be low. Therefore, when the electrode lead assembly L is connected to the electrode assembly of the secondary battery and coupled to the exterior material, the internal gas of the exterior material of the secondary battery may be effectively emitted through the flow path S.

Specifically, as the secondary battery is repeatedly charged and discharged, gas may be generated in the internal space of the exterior material of the secondary battery, thereby increasing the internal pressure of the exterior material of the secondary battery. When the internal pressure of the secondary battery increases, the coupling between the thin first portion 121 of the lead film 120 and the electrode lead 110 may be released, thereby opening the flow path S toward the internal space of the exterior material. In this case, the internal gas of the exterior material may be emitted to the outside through the flow path S.

The electrode lead 110 may be electrically connected to the electrode assembly of the secondary battery. At this time, at least a portion of the electrode lead 110 may protrude to the outside of the exterior material of the secondary battery. The electrode lead 110 may partially protrude to the outside of the exterior material to transmit electrical energy to an electronic device, and may be assumed to be connected to the electrode assembly of the secondary battery. At this time, the electrode lead 110 may be a conductor.

The lead film 120 covers at least a portion of the electrode lead 110, and may be disposed on both surfaces of the electrode lead 110. When the electrode lead assembly L is electrically connected to the electrode assembly of the secondary battery, the lead film 120 may be coupled to the inner surface of the exterior material to seal the internal space of the exterior material.

The lead film 120 may be formed as a semi-permeable membrane that does not allow liquid such as electrolyte to pass through but allows gas to pass through. When the electrode lead assembly L is electrically connected to the electrode assembly of the secondary battery, gas is generated inside the exterior material as the secondary battery 10 is repeatedly charged and discharged, and this gas may flow into the flow path S between the lead film 120 and the flow path forming portion 130. Thereafter, the gas within the flow path S may be emitted to the outside through the lead film 120, which is a semi-permeable membrane.

Meanwhile, the flow path forming portion 130 is a member interposed between the electrode lead 110 and the lead film 120, and one surface of the flow path forming portion 130 may be bonded to the electrode lead 110. On the other hand, the other surface of the flow path forming portion 130 is not attached to the lead film 120, so that a movement space through which gas may move may be formed between the flow path forming portion 130 and the lead film 120. This movement space may be a flow path S through which the internal gas of the exterior material 200 is emitted. Specifically, the flow path S is an empty space formed between one surface of the flow path forming portion 130 and the lead film 120, and the shape of the flow path S may correspond to the shape of the flow path forming portion 130.

The flow path forming portion 130 may include a first member 131 extending along the width direction of the electrode lead 110 and a second member 132 extending from one end of the first member 131 toward the internal space of the exterior material 200. At this time, the widths of the first member 131 and the second member 132 may be formed in various ways.

Here, when one second member 132 is connected to one end of the first member 131, the second member 132 may be connected to the center of the first member 131. In this case, the flow path forming portion 130 may have a roughly alphabet "T" shape. At this time, the shape of the flow path S may correspond to the shape of the flow path forming portion 130, and thus the flow path S may also have an alphabet "T" shape.

Additionally, a plurality of second members 132 may be connected to one end of the first member 131. In this case, the flow path forming portion 130 may have various shapes. For example, the flow path forming portion 130 may have a "TT" shape. The shape of the flow path S may correspond to the shape of the flow path forming portion 130, and thus the flow path S may have a "TT" shape.

Meanwhile, the first portion 121 of the lead film 120 may cover the second member 132, and the second portion 122 may cover at least a portion of the first member 131. Specifically, the upper part of the flow path forming portion 130 of the lead film 120 is composed of the first portion 121 and the second portion 122, and the first portion 121 may cover the upper side of the second member 132. Additionally, the second portion 122 may cover at least a portion of the first member 131.

Meanwhile, it is illustrated that the lead film 120 above the flow path forming portion 130 covers the flow path forming portion 130. This lead film 120 above the flow path forming portion 130 may include a plurality of first portions 121 and a plurality of second portions 122.

Specifically, the second portions 122 are provided at both ends and the center of the lead film 120, and the first portion 121 may be formed between the second portions 122. Here, the first portion 121 has a shape extending in a straight line along the length direction of the electrode lead 110, and thus may cover the entire second members 132, which are legs of the flow path forming portion 130.

Additionally, the first portion 121 may cover a portion of the first member 131 of the flow path forming portion 130. At this time, the second portion 122 may cover the remaining portion of the first member 131 of the flow path forming portion 130 that the first portion 121 cannot cover.

Since the first portion 121 has a relatively thinner thickness than the second portion 122, the first portion 121 may move upward even at a lower pressure compared to the second portion 122. When gas generated in the internal space of the exterior material 200 passes through the lead film 120, which is a semi-permeable membrane, and flows into the flow path S, the first portion 121 may move upward and the volume of the flow path S may increase. In this way, the gas introduced into the flow path S may pass through the outer portion of the lead film 120 and be emitted to the outside of the secondary battery 10.

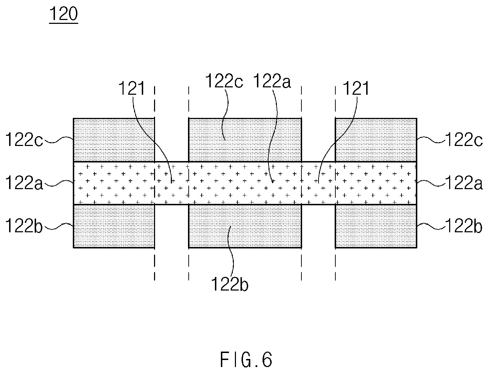

FIG. 6 is a view for describing an example in which the first portion of the lead film is formed in a single-layer structure.

FIG. 6 illustrates a state in which the first portion 121 of the lead film 120 is formed in a single-layer structure. At this time, the first portion 121 may be composed of a single-layer film made of a resin material, and the second portion 122 may have a multilayer structure in which films made of a resin material are laminated in three layers.

Specifically, the second portion 122 may be a three-layer film composed of a central base layer 122a and two layers 122b, 122c formed on the upper and lower sides of the base layer 122a, respectively. The first portion 121 may have a single-layer 121a structure connected to the base layer 122a of the second portion 122. That is, the first portion 121a may form a single resin film together with the base layer 122a of the second portion 122. At this time, films 122b, 122c may be attached in one layer each to the upper and lower parts of the base layer 122a of the second portion 122.

Meanwhile, the thicknesses of the first portion 121 and the second portion 122 may be formed in various ways. For example, the thickness of the first portion 121 composed of a single layer may be 60 µm to 75 µm, and the thickness of the second portion 122 having a multilayer structure may be 200 µm. Additionally, the thickness of the second portion 122 may have a value of 1.5 times or more and 3 times or less thicker than the thickness of the first portion 121.

### Second embodiment

An electrode lead assembly according to the second embodiment of the present disclosure differs from the electrode lead assembly according to the first embodiment in that the first portion of the lead film has a multilayer structure. Contents common to the electrode lead assembly according to the first embodiment will be omitted as much as possible, and the electrode lead assembly according to the second embodiment will be described focusing on the differences. That is, it is obvious that contents not described in the electrode lead assembly according to the second embodiment may be regarded as contents of the electrode lead assembly according to the first embodiment, if necessary.

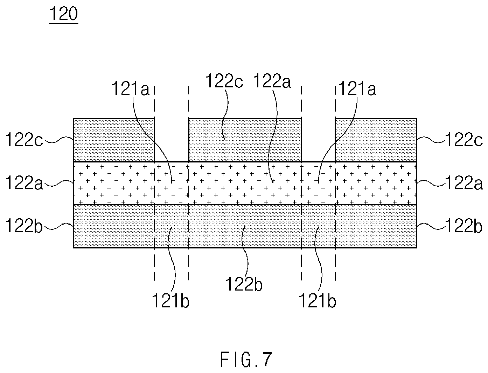

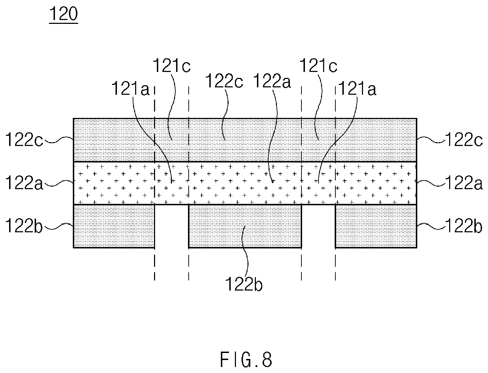

FIGS. 7 and 8 are views for describing an example in which the first portion of the lead film is formed in a multilayer structure.

Referring to FIGS. 7 and 8, in the electrode lead assembly L according to the second embodiment of the present disclosure, the first portion 121 of the lead film 120 may be composed of two layers 121a, 121b, and the second portion 122 of the lead film 120 may be composed of three layers 122a, 122b, 122c. The first portion 121 may include a central base layer 121a and a single layer 121b bonded to the bottom of the base layer 121a. The second portion 122 may include a central base layer 122a and film layers 122b, 122c attached to the upper and lower parts of the base layer 122a, respectively.

That is, the first portion 121 may have a structure in which two layers of films 121a, 121b made of a resin material are laminated, and the second portion 122 may have a structure in which three layers of films 122a, 122b, 122c made of a resin material are laminated. At this time, the base layer 121a of the first portion 121 and the base layer 122a of the second portion 122 may be a single resin film connected to each other. Additionally, the bottom layer 121a of the first portion 121 and the bottom layer 122a of the second portion 122 may be a single resin film connected to each other.

Meanwhile, the total thickness of each of the first portion 121a, 121b and the second portion 122a, 122b, 122c may be formed in various ways. For example, the total thickness of the first portion 121a, 121b may be 125 µm to 135 µm, and the total thickness of the second portion 122a, 122b, 122c may be 200 µm. Additionally, the total thickness of the second portion 122a, 122b, 122c may have a value of 1.5 times or more and 3 times or less thicker than the total thickness of the first portion 121a, 121b.

Meanwhile, the first portion 121 may be composed of two layers 121a, 121c, and the second portion 122 may be composed of three layers 122a, 122b, 122c. Specifically, the first portion 121 may include a central base layer 121a and one layer 121c bonded to the upper part of the base layer 121a, and the second portion 122 may include a central base layer 122a and film layers 122b, 122c bonded to the upper and lower parts of the base layer 122a, respectively.

That is, the first portion 121 may have a structure in which two layers of films 121a, 121b made of a resin material are laminated, and the second portion 122 may have a structure in which three layers of films 122a, 122b, 122c made of a resin material are laminated. At this time, the base layer 121a of the first portion 121 and the base layer 122a of the second portion 122 may be a single resin film connected to each other. Additionally, the upper layer 121c of the first portion 121 and the upper layer 122c of the second portion 122 may be a single resin film connected to each other.

Meanwhile, the total thickness of each of the first portion 121a, 121c and the second portion 122a, 122b, 122c may be formed in various ways. For example, the total thickness of the first portion 121a, 121c may be 125 µm to 135 µm, and the total thickness of the second portion 122a, 122b, 122c may be 200 µm. Additionally, the total thickness of the second portion 122a, 122b, 122c may have a value of 1.5 times or more and 3 times or less thicker than the total thickness of the first portion 121a, 121c.

### Secondary battery

### First embodiment

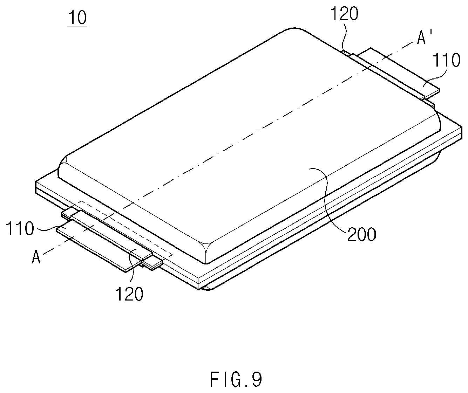

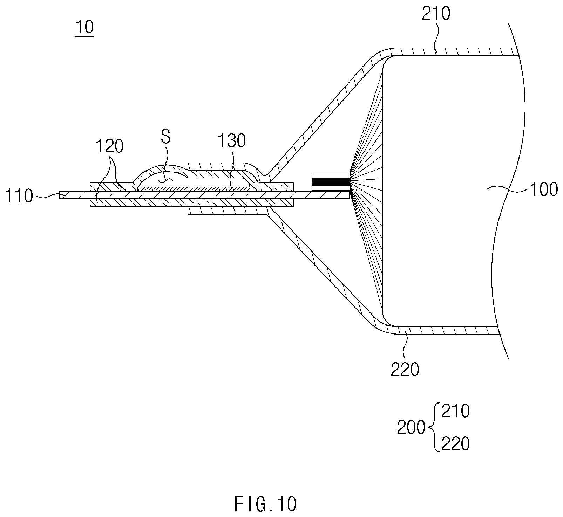

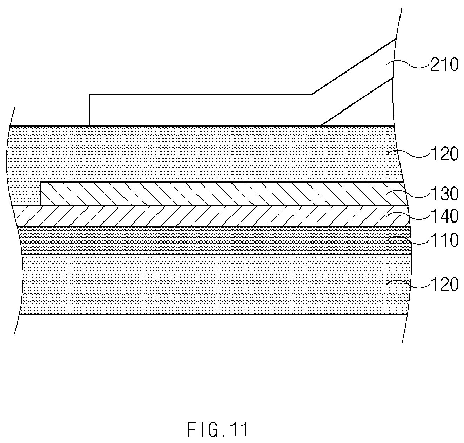

FIG. 9 is a perspective view illustrating a secondary battery according to the present disclosure, and FIG. 10 is a cross-sectional view illustrating a portion of a cross-section taken along line A-A' of FIG. 9. Additionally, FIG. 11 is a view showing in detail an adhesive structure in which an electrode lead, a flow path forming portion, a lead film, and an exterior material are bonded in the secondary battery according to the present disclosure.

A secondary battery 10 according to the first embodiment of the present disclosure may include the electrode lead assembly L described above. Referring to FIGS. 9 to 11 and the drawings of the electrode lead assembly described above, the secondary battery 10 according to the first embodiment of the present disclosure may include an electrode assembly 100 including an electrode and a separator; an exterior material 200 accommodating the electrode assembly 100; an electrode lead 110 connected to the electrode assembly 100 and protruding to the outside of the exterior material 200; a lead film 120 covering at least a portion of the electrode lead 110 to insulate the electrode lead 110 from the exterior material 200; and a flow path forming portion 130 provided between the electrode lead 110 and the lead film 120 and forming a gas emission flow path S through which internal gas of the exterior material 200 is emitted to the outside when internal pressure of the exterior material 200 increases. Here, the lead film 120 may include a first portion 121; and a second portion 122 thicker than the first portion 121, and the first portion 121 may be provided on one side of the flow path forming portion 130.

In this case, the first portion 121 has a relatively thin thickness, and thus the operating pressure at which the first portion 121 is opened to open the gas emission flow path S may be maintained relatively low. Therefore, since the gas emission flow path S opens even at a relatively low pressure, there is an advantageous effect of easily emitting internal gas of the secondary battery.

The secondary battery 10 may have a form in which the electrode assembly 100 is accommodated inside the exterior material 200. For example, the secondary battery 10 according to the present disclosure may refer to a pouch-type secondary battery among various types of secondary batteries that can be charged and discharged. This is merely one example, and the shape of the secondary battery 10 may vary.

The electrode assembly 100 may include a positive electrode, a negative electrode, and a separator. Here, the separator may be disposed between the positive electrode and the negative electrode to physically separate the positive electrode and the negative electrode. The electrode assembly 100 may be in a stacked form where a positive electrode, a negative electrode, and a separator are laminated, or in a jelly-roll form where a positive electrode, a negative electrode, and a separator are wound.

The electrode assembly 100 may be accommodated inside the exterior material 200. The exterior material 200 may be a pouch-type exterior material including an inner layer, a metal layer, and an outer layer. Here, the inner layers of the pouch-type exterior material may be bonded to each other by heat and pressure to seal the internal space of the exterior material 200. That is, after the exterior material 200 accommodates the electrode assembly 100 therein, the inner layer may be sealed by heat and pressure. Meanwhile, Al, STS, or the like may be mainly used for the metal layer, and the outer layer may be made of an insulating material.

Additionally, the exterior material 200 may be configured by coupling an upper exterior material 210 and a lower exterior material 220. At this time, a receiving space in which the electrode assembly 100 is accommodated may be formed in the lower exterior material 220. Additionally, the upper exterior material 210 and the lower exterior material 220 may be coupled in various ways. For example, the edge terrace portions of the upper exterior material 210 and the lower exterior material 220 may be thermally fused to each other.

The inner layer capable of sealing the exterior material 200 through sealing may be made of one or more materials selected from the group consisting of polyethylene, polypropylene, polycarbonate, polyethylene terephthalate, polyvinyl chloride, acrylic polymers, polyacrylonitrile, polyimide, polyamide, cellulose, aramid, nylon, polyester, polyparaphenylene benzobisoxazole, polyarylate, Teflon, and glass fiber. In particular, polyolefin resins such as polypropylene (PP) or polyethylene (PE) may be mainly used.

The secondary battery 10 may include an electrode lead 110. The electrode lead 110 may be electrically connected to the electrode assembly 100 and may be disposed to protrude to the outside of the exterior material 200. The secondary battery 10 may provide electrical energy to the outside by the electrode lead 110 protruding to the outside of the exterior material 200. Therefore, the electrode lead 110 may be a conductor.

The lead film 120 may cover the electrode lead 110 to insulate the exterior material 200 and the electrode lead 110 from each other. Specifically, the lead film 120 may be disposed on both surfaces of the electrode lead 110 to cover the electrode lead 110. The lead films 120 are configured in a pair, and may each be disposed on both surfaces of the electrode lead 110.

Additionally, the lead film 120 may be formed as a semi-permeable membrane that does not allow the electrolyte to pass through but allows gas generated inside the exterior material 200 to pass through. In this case, the gas generated inside the exterior material 200 may be emitted to the outside of the exterior material 200 through the lead film 120, which is a semi-permeable membrane, through the gas emission flow path S described above.

Meanwhile, the secondary battery 10 may generate gas as it is repeatedly charged and discharged, and thus the pressure inside the exterior material 200 may increase. If the pressure inside the exterior material 200 increases excessively, venting or the like may occur, thereby causing the secondary battery 10 to lose its function.

Specifically, an electrolyte may be accommodated together with the electrode assembly 100 inside the exterior material 200 of the secondary battery 10. At this time, residual moisture of the electrolyte or moisture infiltrated from the outside may react with the lithium salt inside the exterior material 200 of the secondary battery 10 to generate HF, and gases such as carbon dioxide, carbon monoxide, ethylene, and methane may be generated due to decomposition of the electrolyte.

Additionally, depending on the material of the positive electrode included in the electrode assembly 100 of the secondary battery 10, hydrogen and HF may be additionally generated, which may cause overheating due to overcharge and internal short circuit during the charging and discharging process. Accordingly, a large amount of gas may be generated inside the exterior material 200. The pressure inside the exterior material may increase due to such gas, and the increased pressure may cause a swelling phenomenon in which the exterior material 200 swells or a venting phenomenon in which a portion of the exterior material 200 bursts.

The secondary battery 10 according to the present disclosure may include a configuration capable of emitting gas inside the exterior material 200 to the outside of the exterior material 200 to prevent the occurrence of a venting phenomenon. Specifically, the secondary battery 10 may include a flow path forming portion 130 forming a gas emission flow path S through which the gas inside the exterior material 200 is emitted.

The flow path forming portion 130 is a member interposed between the electrode lead 110 and the lead film 120, and one surface of the flow path forming portion 130 may be bonded to the electrode lead 110. On the other hand, the other surface of the flow path forming portion 130 is not attached to the lead film 120, so that a movement space through which gas may move may be formed between the flow path forming portion 130 and the lead film 120. This movement space may be a gas emission flow path S through which the internal gas of the exterior material 200 is emitted.

Specifically, the gas emission flow path S is an empty space formed between one surface of the flow path forming portion 130 and the lead film 120, and the shape of the gas emission flow path S may correspond to the shape of the flow path forming portion 130.

The flow path forming portion 130 may include a first member 131 extending along the width direction of the electrode lead 110 and a second member 132 extending from one end of the first member 131 toward the internal space of the exterior material 200. At this time, the widths of the first member 131 and the second member 132 may be formed in various ways.

Here, when one second member 132 is connected to one end of the first member 131, the second member 132 may be connected to the center of the first member 131. In this case, the flow path forming portion 130 may have a roughly alphabet "T" shape. At this time, the shape of the gas emission flow path S may correspond to the shape of the flow path forming portion 130, and thus the gas emission flow path S may also have an alphabet "T" shape.

Additionally, a plurality of second members 132 may be connected to one end of the first member 131. In this case, the flow path forming portion 130 may have various shapes. For example, the flow path forming portion 130 may have a "TT" shape. The shape of the gas emission flow path S may correspond to the shape of the gas emission flow path forming portion 130, and thus the gas emission flow path S may have a "TT" shape.

Meanwhile, the first portion 121 of the lead film 120 may cover the second member 132, and the second portion 122 may cover at least a portion of the first member 131. Specifically, the upper part of the flow path forming portion 130 of the lead film 120 is composed of the first portion 121 and the second portion 122, and the first portion 121 may cover the upper side of the second member 132. Additionally, the second portion 122 may cover at least a portion of the first member 131.

Meanwhile, it is illustrated that the lead film 120 above the flow path forming portion 130 covers the flow path forming portion 130. This lead film 120 above the flow path forming portion 130 may include a plurality of first portions 121 and a plurality of second portions 122.

Specifically, the second portions 122 are provided at both ends and the center of the lead film 120, and the first portion 121 may be formed between the second portions 122. Here, the first portion 121 has a shape extending in a straight line along the length direction of the electrode lead 110, and thus may cover the entire second members 132, which are legs of the flow path forming portion 130.

Additionally, the first portion 121 may cover a portion of the first member 131 of the flow path forming portion 130. At this time, the second portion 122 may cover the remaining portion of the first member 131 of the flow path forming portion 130 that the first portion 121 cannot cover.

Since the first portion 121 has a relatively thinner thickness than the second portion 122, the first portion 121 may move upward even at a lower pressure compared to the second portion 122. When gas generated in the internal space of the exterior material 200 passes through the lead film 120, which is a semi-permeable membrane, and flows into the gas emission flow path S, the first portion 121 may move upward and the volume of the gas emission flow path S may increase. In this way, the gas introduced into the gas emission flow path S may pass through the outer portion of the lead film 120 and be emitted to the outside of the secondary battery 10.

The first portion 121 of the lead film 120 may be formed in a single-layer structure. The first portion 121 may be composed of a single-layer film made of a resin material, and the second portion 122 may have a multilayer structure in which films made of a resin material are laminated in three layers.

Specifically, the second portion 122 may be a three-layer film composed of a central base layer 122a and two layers 122b, 122c formed on the upper and lower sides of the base layer 122a, respectively. The first portion 121 may have a single-layer 121a structure connected to the base layer 122a of the second portion 122. That is, the first portion 121a may form a single resin film together with the base layer 122a of the second portion 122. At this time, films 122b, 122c may be attached in one layer each to the upper and lower parts of the base layer 122a of the second portion 122.

Meanwhile, the thicknesses of the first portion 121 and the second portion 122 may be formed in various ways. For example, the thickness of the first portion 121 composed of a single layer may be 60 µm to 75 µm, and the thickness of the second portion 122 having a multilayer structure may be 200 µm. Additionally, the thickness of the second portion 122 may have a value of 1.5 times or more and 3 times or less thicker than the thickness of the first portion 121.

### Second embodiment

A secondary battery according to the second embodiment of the present disclosure differs from the secondary battery according to the first embodiment in that the first portion of the lead film has a multilayer structure. Contents common to the secondary battery according to the first embodiment will be omitted as much as possible, and the secondary battery according to the second embodiment will be described focusing on the differences. That is, it is obvious that contents not described in the secondary battery according to the second embodiment may be regarded as contents of the secondary battery according to the first embodiment, if necessary.

In the secondary battery 10 according to the second embodiment of the present disclosure, the first portion 121 may be composed of two layers 121a, 121b, and the second portion 122 may be composed of three layers 122a, 122b, 122c. The first portion 121 may include a central base layer 121a and a single layer 121b bonded to the bottom of the base layer 121a. The second portion 122 may include a central base layer 122a and film layers 122b, 122c attached to the upper and lower parts of the base layer 122a, respectively.

That is, the first portion 121 may have a structure in which two layers of films 121a, 121b made of a resin material are laminated, and the second portion 122 may have a structure in which three layers of films 122a, 122b, 122c made of a resin material are laminated. At this time, the base layer 121a of the first portion 121 and the base layer 122a of the second portion 122 may be a single resin film connected to each other. Additionally, the bottom layer 121a of the first portion 121 and the bottom layer 122a of the second portion 122 may be a single resin film connected to each other.

Meanwhile, the total thickness of each of the first portion 121a, 121b and the second portion 122a, 122b, 122c may be formed in various ways. For example, the total thickness of the first portion 121a, 121b may be 125 µm to 135 µm, and the total thickness of the second portion 122a, 122b, 122c may be 200 µm. Additionally, the total thickness of the second portion 122a, 122b, 122c may have a value of 1.5 times or more and 3 times or less thicker than the total thickness of the first portion 121a, 121b.

Meanwhile, the first portion 121 may be composed of two layers 121a, 121c, and the second portion 122 may be composed of three layers 122a, 122b, 122c. Specifically, the first portion 121 may include a central base layer 121a and one layer 121c bonded to the upper part of the base layer 121a, and the second portion 122 may include a central base layer 122a and film layers 122b, 122c bonded to the upper and lower parts of the base layer 122a, respectively.

That is, the first portion 121 may have a structure in which two layers of films 121a, 121b made of a resin material are laminated, and the second portion 122 may have a structure in which three layers of films 122a, 122b, 122c made of a resin material are laminated. At this time, the base layer 121a of the first portion 121 and the base layer 122a of the second portion 122 may be a single resin film connected to each other. Additionally, the upper layer 121c of the first portion 121 and the upper layer 122c of the second portion 122 may be a single resin film connected to each other.

Meanwhile, the total thickness of each of the first portion 121a, 121c and the second portion 122a, 122b, 122c may be formed in various ways. For example, the total thickness of the first portion 121a, 121c may be 125 µm to 135 µm, and the total thickness of the second portion 122a, 122b, 122c may be 200 µm. Additionally, the total thickness of the second portion 122a, 122b, 122c may have a value of 1.5 times or more and 3 times or less thicker than the total thickness of the first portion 121a, 121c.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [List of Reference Numerals]

| | | | |
|---|---|---|---|
| 10: | Secondary battery | 100: | Electrode assembly |
| 110: | Electrode lead | 120: | Lead film |
| 121: | First portion | 122: | Second portion |
| 130: | Flow path forming portion | 131: | First member |
| 132: | Second member | 140: | Adhesive layer |
| 200: | Exterior material | 210: | Upper exterior material |
| 220: | Lower exterior material | S: | Gas emission flow path |
| L: | Electrode lead assembly | | |

## Claims

1. An electrode lead assembly comprising:
an electrode lead provided to be connected to an electrode assembly;
a lead film covering at least a portion of the electrode lead; and
a flow path forming portion disposed between the electrode lead and the lead film and forming a flow path through which fluid flows,
wherein the lead film comprises:
a first portion; and
a second portion thicker than the first portion, and
wherein the first portion is provided on one side of the flow path forming portion.

2. The electrode lead assembly according to claim 1,
wherein one surface of the flow path forming portion is attached to the electrode lead, and
wherein the other surface of the flow path forming portion is not attached to the lead film.

3. The electrode lead assembly according to claim 2,
wherein the flow path is formed between the other surface of the flow path forming portion and the lead film.

4. The electrode lead assembly according to claim 1,
wherein the shape of the flow path corresponds to the shape of the flow path forming portion.

5. The electrode lead assembly according to claim 1,
wherein the flow path forming portion comprises:
a first member extending along the width direction of the electrode lead; and
a second member connected to the first member and extending along the length direction of the electrode lead.

6. The electrode lead assembly according to claim 5,
wherein the width of the first member is greater than the width of the second member.

7. The electrode lead assembly according to claim 6,
wherein the plurality of second members are connected to the first member.

8. The electrode lead assembly according to claim 5,
wherein the first portion covers the second member, and
wherein the second portion covers at least a portion of the first member.

9. The electrode lead assembly according to claim 1,
wherein the first portion is composed of a single-layer film made of a resin material, and
wherein the second portion has a multilayer structure in which films made a resin material are laminated in three layers.

10. The electrode lead assembly according to claim 1,
wherein the first portion has a multilayer structure in which films made of a resin material are laminated in two layers, and
wherein the second portion has a multilayer structure in which films made of a resin material are laminated in three layers.

11. The electrode lead assembly according to claim 1,
wherein the second portion is formed to be 1.5 to 3 times thicker than the first portion.

12. The electrode lead assembly according to claim 1,
wherein the thickness of the first portion is 60 µm to 75 µm, and
wherein the thickness of the second portion is 200 µm.

13. The electrode lead assembly according to claim 1,
wherein the thickness of the first portion is 125 µm to 135 µm, and
wherein the thickness of the second portion is 200 µm.

14. A secondary battery comprising:
an electrode assembly comprising an electrode and a separator;
an exterior material accommodating the electrode assembly;
an electrode lead connected to the electrode assembly and protruding to the outside of the exterior material;
a lead film covering at least a portion of the electrode lead to insulate the electrode lead from the exterior material; and
a flow path forming portion provided between the electrode lead and the lead film and forming a gas emission flow path through which internal gas of the exterior material is emitted to the outside,
wherein the lead film comprises:
a first portion; and
a second portion thicker than the first portion, and
wherein the first portion is provided on one side of the flow path forming portion.

15. The secondary battery according to claim 14,
wherein the flow path forming portion comprises:
a first member extending along the width direction of the electrode lead; and
a second member extending from the first member toward the internal space of the exterior material.

16. The secondary battery according to claim 15,
wherein the width of the first member is greater than the width of the second member.

17. The secondary battery according to claim 16,
wherein the plurality of second members are connected to the first member.
